# EUROPÄISCHE PATENTSCHRIFT

(11) **EP 0 436 867 B1**
(45) Veröffentlichungstag und Bekanntmachung des Hinweises auf die Patenterteilung: **11.08.1993**
(21) Anmeldenummer: 90124173.7
(22) Anmeldetag: 14.12.1990
(51) Int. Cl.: C09B 67/48, D06P 1/18

(54) **Färbestabile beta-Modifikation eines Monoazofarbstoffes, Verfahren zu ihrer Herstellung und ihre Verwendung**
Colour-fast beta modification of a monoazo dye, process for its preparation and its use
Bêta modification stable d'un colorant monoazo, son procédé de fabrication et son utilisation

(30) Priorität: 10.01.1990 DE 4000529
(43) Veröffentlichungstag der Anmeldung: 17.07.1991
(73) Patentinhaber: CASSELLA Aktiengesellschaft, D-60386 Frankfurt (DE)
(72) Erfinder: Binder, Rudolf, Dr., W-6457 Maintal 4 (DE); Schophoff, Friedrich, Dr., W-6000 Frankfurt am Main 61 (DE); Hofmann, Klaus, W-6000 Frankfurt am Main 61 (DE)
(74) Vertreter: Urbach, Hans-Georg

(56) Entgegenhaltungen:
- EP-A- 0 187 916
- CH-A- 644 621
- CH-A- 650 522
- DE-A- 2 735 376
- DE-C- 1 932 806

## Beschreibung

Die vorliegende Erfindung betrifft die färbestabile β-Modifikation des Farbstoffes der Formel I 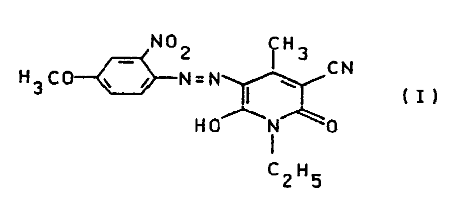
mit dem Röntgenbeugungsdiagramm (Cu-Kα-Strahlung) mit folgenden Linien bei den Beugungswinkeln 2ϑ (°):
- Linien hoher Intensität:: 11.57, 24.93, 28.09;
- Linien mittlerer Intensität:: 8.23, 15.52, 18.85, 20.27;
- Linien geringer Intensität:: 13.99, 19.35, 21.45;

Die Erfindung betrifft ferner ein Verfahren zur Herstellung der färbestabilen β-Modifikation des Farbstoffes der Formel I, ihre Verwendung zum Färben und Bedrucken von geformten Gebilden sowie die β-Modifikation des Farbstoffes der Formel I enthaltende Farbstoffpräparationen.

Nach dem bisherigen Stand der Technik wird der Farbstoff der Formel I, wie in DBP 1932806 beschrieben, durch Diazotieren von 4-Methoxy-2-nitroanilin und Kuppeln auf 1-Ethyl-3-cyano-4-methyl-6-hydroxypyrid-2-on in wäßriger Lösung hergestellt. Nach Beendigung der Kupplung wird der ausgefallene Farbstoff durch Filtration isoliert, mit Wasser gewaschen und getrocknet.

Nachteilig an diesem Verfahren, bei dem die α-Modifikation entsteht, ist, daß die entstandene Paste relativ langsam filtriert und den Farbstoff in maximal 30 Gew.% enthält, d.h. es resultiert eine ungünstige Raum-Zeit-Ausbeute.

Aus der EP-A 187 916 ist bereits bekannt, daß die α-Modifikation eines Farbstoffes in dessen β-Modifikation umgewandelt werden kann und daß damit eine Verbesserung der Färbestabilität einhergeht.

Diese α-Modifikation des Farbstoffes der Formel I weist ein Röntgenbeugungsdiagramm (Cu-Kα-Strahlung) auf, das folgende Linien bei den Beugungswinkeln 2 ϑ (°) besitzt;
- Linien hoher Intensität:: 11.38, 26.87;
- Linien mittlerer Intensität:: 7.60, 8.30, 17.26, 17.88, 27.86;
- Linien geringer Intensität:: 14.49, 15.28, 18.92;

Die für die färbestabile β-Modifikation, färbeinstabile α-Modifikation sowie die weiter unten genannten γ- und δ-Modifikationen des Farbstoffs I angegebenen Linien des Röntgenbeugungsdiagramms sind mit einem rechnergesteuerten Pulverdiffraktometer der Firma Siemens, Typ Diffrac 11, mit Kupfer-Kα-Strahlung (τ = 1,54060, Kathodenspannung 40 KV, Kathodenstrom 32 mA) aufgenommen worden.

Die erfindungsgemäße β-Modifikation des Farbstoffes der Formel I wird hergestellt durch Erhitzen der α-Modifikationen auf Temperaturen von 50 bis 150°C.

Bevorzugt wird auf 60 bis 140°C, besonders bevorzugt auf 70 bis 120°C erhitzt, wobei unter Normaldruck oder auch unter Überdruck gearbeitet werden kann.

Bevorzugt wird die α-Modifikation in Wasser suspendiert auf die genannten Temperaturen erhitzt.

Der zu erhitzenden Suspension werden gegebenenfalls Dispergiermittel und/oder Emulgatoren und/oder Lösungsmittel zugesetzt. Wenn auf Temperaturen erhitzt wird, die über dem Siedepunkt der flüssigen Phase liegen, ist die Anwendung von Überdruck erforderlich. Das Erhitzen wird solange durchgeführt, bis die α-Modifikation in die β-Modifikation umgewandelt worden ist, was in der Regel 10 Minuten bis 10 Stunden dauert. Die Umwandlung kann röntgenographisch oder mikroskopisch an entnommenen Proben verfolgt werden.

Geeignete Dispergiermittel sind zum Beispiel Kondensationsprodukte aus Naphthalinsulfonsäure und Formaldehyd oder aus Phenol, Formaldehyd und Natriumbisulfit, Ligninsulfonate oder Sulfitcelluloseablauge oder andere anionische oder nichtionische oberflächenaktive Verbindungen. Geeignete nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettsäuren, Phenolen, Alkylphenolen oder Carbonsäureamiden. Weitere anionaktive Dispergiermittel sind beispielsweise Alkyl- oder Alkylarylsulfonate oder Alkylaryl-polyglykolethersulfate.

Das Dispergiermittel oder ein Dispergiermittelgemisch wird bevorzugt in einer Menge von 0,1 bis 30 Gew.%, insbesondere von 0,2 bis 10 Gew.%, bezogen auf die Farbstoffmenge eingesetzt.

Geeignete Lösungsmittel sind z.B. Ketone, wie Methylethylketon, oder Alkohole, wie z.B. Ethanol, n-Propanol, i-Propanol, n-Butanol, i-Butanol, sec.-Butanol, tert.-Butanol, Pentanole oder Glykole, insbesondere Diethylenglykol, oder chlorierte Kohlenwasserstoffe, insbesondere Chlorbenzol.

Besonders bevorzugt wird als wäßrige Suspension direkt die Suspension eingesetzt, die bei der Synthese des Farbstoffs durch Diazotierung und Kupplung nach beendeter Kupplung anfällt. In diesem Falle kann das Dispergiermttel bereits bei der Kupplung vorhanden sein, z.B. zusammen mit der Kupplungskomponente vorgelegt werden.

Der wie beschrieben durch Diazotierung, Kupplung und Erhitzen hergestellte Farbstoff der Formel I in der β-Modifikation filtriert schnell, d.h. die Filtrierzeit ist in der Regel um den Faktor 15 kürzer als bei der α-Modifikation. Darüber hinaus weist die Paste einen Farbstoffgehalt von bis zu 65 Gew.% auf. Die Raum-Zeit-Ausbeute wird also erheblich verbessert.

Das Erhitzen kann auch im Verlauf der üblichen Überführung des Farbstoffs in eine hohe Feinverteilung vorgenommen werden. Die färbeinstabile α-Modifikation wird dabei, vorzugweise unter Zusatz von nichtionogenen oder anionaktiven Dispergiermitteln, für die Beispiele bereits genannt wurden, sowie gegebenenfalls anderen üblichen Zusätzen (wie z.B. Staubschutz-, Frostschutz-, Netzmittel, Austrocknungsverhinderer etc.) naß auf üblichen Vorrichtungen, wie z.B. Mühlen oder Kneter, der Einwirkung von Scherkräften ausgesetzt und dabei in eine feindisperse Form überführt. Geeignet Mühlen sind z.B. Kugel-, Schwing-, Perl-, Sandmühlen. Wenn die Überführung des Farbstoffs in eine feindisperse Form bei den genannten Temperaturen von 50 bis 150°C, vorzugsweise 80 bis 140°C, ganz besonders bevorzugt 90 bis 120°C, durchgeführt wird, erfolgt dabei gleichzeitig auch eine Umwandlung der färbeinstabilen α-Modifikation des Farbstoffs der Formel I in die färbestabile β-Modifikation des Farbstoffs der Formel I.

Bei der Feinverteilung werden die Farbstoff-Teilchen mechanisch so weit zerkleinert, bis eine optimale spezifische Oberfläche erreicht und die Sedimentation der Farbstoffteilchen möglichst gering ist. Die Größe der Farbstoffteilchen liegt im allgemeinen bei etwa 0,1 bis 10 µm.

Auch falls der Farbstoff der Formel I bereits auf einer früheren Stufe in die β-Modifikation überführt worden ist, schließt sich vor einer Anwendung eine Überführung in eine hohe Feinverteilung in üblicher Weise an. Die so erhaltenen Farbstoffpräparationen sind ebenfalls Gegenstand der vorliegenden Erfindung. Sie weisen einen Farbstoffgehalt von 15 bis 40 Gew.%, vorzugsweise 20 bis 30 Gew.% auf. Für gewisse Anwendungsbereiche werden Pulvereinstellungen bevorzugt. Diese Pulver enthalten den Farbstoff, Dispergiermittel und andere Hilfsmittel, wie z.B. Netz-, Oxydations-, Konservierungs- und Entstaubungsmittel. Pulverförmige Farbstoffpräparationen enthalten Dispergiermittel bevorzugt zu 20 bis 45 Gew. %.

Ein besonders bevorzugtes Herstellungsverfahren für pulverförmige Farbstoffpräparationen besteht darin, daß den oben beschriebenen flüssigen Farbstoffpräparationen die Flüssigkeit entzogen wird, z.B. durch Vakuumtrocknung, Gefriertrocknung, durch Trocknung auf Walzentrocknern, vorzugsweise aber durch Sprühtrocknung.

Stellt man den Farbstoff der Formel I nach dem Verfahren der sogenannten inversen Kupplung her, d.h. läßt man die Kupplungslösung unter Rühren zu der Diazoniumsalzlösung fließen, wobei man die Kupplungstemperatur durch indirekte oder direkte Kühlung, z.B. mit Eis, im Bereich von etwa -15 bis +50°C, vorzugsweise 0 bis 45°C, hält und rührt anschließend so lange nach, bis die Kupplung beendet ist, so fällt der Farbstoff in der neuen γ-Modifikation an. Diese γ-Modifikation weist ein Röntgenbeugungsdiagramm (Cu-Kα-Strahlung) mit folgenden Linien bei den Beugungswinkeln 2ϑ (°) auf:
- Linien hoher Intensität:: 25.92, 26.81;
- Linien mittlerer Intensität:: 11.86, 12.26, 13.42, 14.91, 24.53;
- Linien geringer Intensität:: 7.36, 10.50, 18.80, 19.75, 22.09, 22.94, 27.33, 27.92, 29.22, 31.13, 32.02;

Kristallisiert man den Farbstoff der Formel I aus organischen Lösungsmitteln um, fällt er je nach den gewählten Bedingungen in der α- oder β-Modifikation oder in Form von Mischungen derselben an. Setzt man als organisches Lösungsmittel jedoch Essigsäure ein, so erhält man die neue δ-Modifikation, die ein Röntgenbeugungsdiagramm (Cu-Kα-Strahlung) aufweist, das folgende Linien bei den Beugungswinkeln 2ϑ (°) besitzt:
- Linien hoher Intensität:: 6.03, 6.55, 9.35;
- Linien mittlerer Intensität:: 10.72, 12.22, 13.26;
- Linien geringe Intensität:: 22.27, 26.53, 27.37, 27.79.

Sowohl die γ- als auch die δ-Modifikation lassen sich wie oben beschrieben in die erfindungsgemäße β-Modifikation überführen.

Der Farbstoff der Formel I in der β-Modifikation ist, auch in Mischungen mit anderen Dispersionsfarbstoffen hervorragend zum Färben und Bedrucken von geformten Gebilden, wie Fasern, Geweben und Folien aus synthetischen und halbsynthetischen Materialien, nach an sich für das Färben und Bedrucken mit Dispersionsfarbstoffen bekannten Verfahren, insbesondere nach dem sogenannten HT-Verfahren, geeignet. Er liefert eine farbstarke orangene Färbung mit guten Echtheitseigenschaften, insbesondere einer sehr guten Thermomigrationsechtheit.

Sie läßt sich aber auch hervorragend zur Färbung von Gebilden verwenden, die aus Mischungen von Fasern synthetischer und halbsynthetischer Materialien, mit Cellulosefasern, zusammengesetzt sind. Dabei wird wie erwünscht der Celluloseanteil nicht oder nur unmerklich angefärbt.

In den folgenden Beispielen bedeuten die Teile Gewichtsteile.

### Beispiel 1

a) 84 Teile 4-Methoxy-2-nitroanilin werden in 200 Teilen Wasser und 150 Teilen Salzsäure gelöst und dann zur Diazotierung bei -5 bis +5°C unter Rühren mit 70 Teilen einer 40 Gew.%igen Natriumnitritlösung versetzt. Nach beendeter Umsetzung läßt man die Diazoniumsalzlösung zu einer Lösung von 89 Teilen 1-Ethyl-3-cyano-4-methyl-6-hydroxypyrid-2-on in 500 Teilen Wasser und 69 Teilen 27 Gew. %iger Natronlauge bei bis zu 50°C zufließen. Man rührt 2 Stunden bei bis zu 50 °C nach, heizt auf 80 bis 95 °C und hält das Reaktionsgemisch unter Rühren 1 Stunde bei dieser Temperatur. Darauf wird der Farbstoff heiß abgesaugt, wozu 23 Sekunden benötigt werden, mit Wasser gewaschen und als Paste isoliert. Diese Paste enthält den Farbstoff in der β-Modifikation und besitzt einen Trockengehalt von 51 Gew.%.
b) 10 Gewichtsteile der nach a) erhaltenen Farbstoffpaste werden unter Zusatz von 10 Gewichtsteilen eines anionischen Dispergiermittels auf Basis eines Kondensationsprodukts aus Naphthalinsulfonsäure und Formaldehyd bei 20°C naß vermahlen, bis 90% der Teilchen gleich oder kleiner 1µm groß sind. Nach der Trocknung des Mahlgutes erhält man eine pulverförmige Einstellung des Farbstoffes, die allen anwendungstechnischen Anforderungen beim Färben hervorragend gerecht wird.

Vergleichsbeispiel: (Herstellung des Farbstoffs in der bisher bekannten α-Modifikation)
a) 84 Teile 4-Methoxy-2-nitroanilin werden in 200 Teilen Wasser und 150 Teilen Salzsäure gelöst und dann zur Diazotierung bei -5 bis +5 °C unter Rühren mit 70 Teilen einer 40 Gew.%igen Natriumnitritlösung versetzt. Nach beendeter Umsetzung läßt man die Diazoniumsalzlösung zu einer Lösung von 89 Teilen 1-Ethyl-3-cyano-4-methyl-6-hydroxypyrid-2-on und einem Teil eines Naphthalin-Formaldehyd-Kondensats in 500 Teilen Wasser und 69 Teilen 27 Gew.%iger Natronlauge bei bis zu 50 °C zufließen. Man rührt 2 Stunden bei bis zu 50 °C nach, und saugt den Farbstoff ab, wozu 5 3/4 Minuten benötigt werden, wäscht mit Wasser und isoliert ihn als Paste. Diese Paste enthält den Farbstoff in der α-Modifikation und besitzt einen Trockengehalt von 20 Gew.%.

### Beispiel 2:

10 Teile einer Paste, die den Farbstoff I in der α-Modifikation enthält (diese Paste wird nach dem vorstehenden Vergleichsbeispiel hergestellt), werden unter Zusatz von 10 Gewichtsteilen eines anionischen Dispergiermittels auf Basis eines Kondensationsprodukts aus Naphthalinsulfonsäure und Formaldehyd in einer Perlmühle bei 80 °C so lange naß vermahlen, bis 90% der Teilchen eine Größe von gleich oder kleiner 1 µm besitzen und auch die vollständige Kristallstrukturumwandlung in die β-Modifikation beobachtet wird. Nach der Trocknung erhält man eine pulverförmige Einstellung des Farbstoffs in der färbestabilen β-Modifikation, die allen anwendungstechnischen Anforderungen beim Färben hervorragend genügt.

### Beispiel 3:

10 Teile Polyethylenterephthalatfasern in Form eines Gewirkes werden 1 Stunde lang unter Druck bei 130°C in einem Bad gefärbt, das 0,25 Teile des feindispergierten Farbstoffes der Formel I in der β-Modifikation in 200 ml Wasser enthält. Die erhaltene orangene Färbung wird wie üblich reduktiv nachbehandelt, heiß und kalt gespült und getrocknet und besitzt hervorragende Echtheitseigenschaften.

### Beispiel 4:

25 Teile Polyethylenterephthalatgewebe werden mit einer Druckpaste bedruckt, die 50 Teile des Farbstoffs der der Formel I in der β-Modifikation, 200 Teile Nafkagummi, 50 Teile Naphtholdiglykolether und 700 Teile Wasser enthält. Nach dem Trocknen wird 30 Sekunden bei 200°C fixiert und schließlich reduktiv nachbehandelt. Man erhält einen orangefarbenen Druck von hervorragenden Echtheitseigenschaften.

## Patentansprüche

1. β-Modifikation des Farbstoffs der Formel I 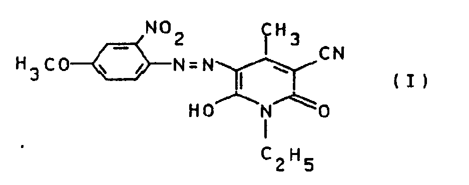 mit dem Röntgenbeugungsdiagramm (Cu-Kα-Strahlung) mit folgenden Linien bei den Beugungswinkeln 2ϑ (°).
Linien hoher Intensität: 11.57, 24.93, 28.09;
Linien mittlerer Intensität: 8.23, 15.52, 18.85, 20.27;
Linien geringer Intensität: 13.99, 19.35, 21.45;

2. Verfahren zur Herstellung der in Anspruch 1 angegebenen β-Modifikation des Farbstoffs der Formel I, dadurch gekennzeichnet, daß die α-Modifikation des Farbstoffs der Formel I auf Temperaturen von 50 bis 150°C erhitzt wird.

3. Verfahren gemäß Anspruch 2, dadurch gekennzeichnet, daß die α-Modifikation in Wasser suspendiert erhitzt wird.

4. Verfahren gemäß Anspruch 3, dadurch gekennzeichnet, daß als wäßrige Suspension direkt die Suspension eingesetzt wird, die bei der Synthese des Farbstoffs durch Diazotierung und Kupplung nach beendeter Kupplung anfällt.

5. Verfahren gemäß Anspruch 3 und/oder 4, dadurch gekennzeichnet, daß der zu erhitzenden Suspension Dispergiermittel und/oder Emulgatoren und/oder Lösungsmittel zugesetzt werden.

6. Verfahren gemäß Anspruch 2, dadurch gekennzeichnet, daß die α-Modifikation im Verlauf der üblichen Überführung des Farbstoffs in eine hohe Feinverteilung erhitzt wird.

7. Farbstoffpräparation, dadurch gekennzeichnet, daß sie die in Anspruch 1 angegebene β-Modifikation des Farbstoffs der Formel I enthält.

8. Verwendung der in Anspruch 1 angegebenen β-Modifikation des Farbstoffs der Formel 1 zum Färben und Bedrucken vor geformten Gebilden, wie Fasern, Geweben und Folien aus synthetischen oder halbsynthetischen Materialien oder deren Mischungen mit Cellulosefasern.

## Claims

1. β-Modification of the dye of the formula I 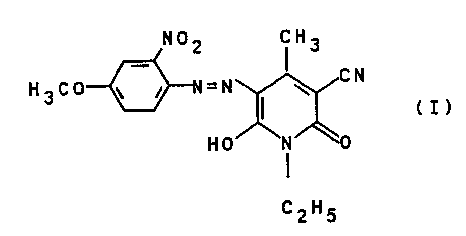 whose X-ray diffraction diagram (Cu-Kα radiation) has the following lines at diffraction angles 2ϑ (°):
Lines of high intensity: 11.57, 24.93, 28.09;
Lines of medium intensity: 8.23, 15.52, 18.85, 20.27;
Lines of low intensity: 13.99, 19.35, 21.45.

2. Process for the preparation of the β-modification of the dye of the formula I given in Claim 1, characterised in that the α-modification of the dye of the formula I is heated to temperatures from 50 to 150°C.

3. Process according to Claim 2, characterised in that the α-modification is heated while suspended in water.

4. Process according to claim 3, characterised in that the suspension which is formed in the synthesis of the dye by diazotisation and coupling, after the coupling reaction is complete, is used directly as aqueous suspension.

5. Process according to Claim 3 and/or 4, characterised in that dispersants and/or emulsifiers and/or solvents are added to the suspension to be heated.

6. Process according to Claim 2, characterised in that the α-modification is heated in the course of the customary conversion of the dye into a very finely divided form.

7. Dye preparation, characterised in that it contains the β-modification of the dye of the formula I given in Claim 1.

8. Use of the β-modification of the dye of the formula I given in Claim 1 for the dyeing and printing of shaped articles, such as fibres, fabrics and sheets made of synthetic or semisynthetic materials or mixtures thereof with cellulose fibres.

## Revendications

1. Modification β du colorant de formule I 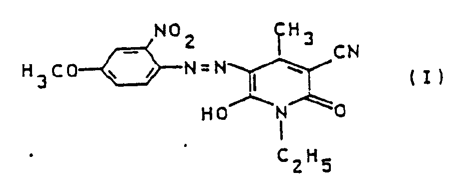 dont le diagramme de diffraction des rayons X (radiation Kα de Cu) présente les raies suivantes, avec les angles de diffraction 2ϑ (°) :
Raies très intenses : 11,57, 24,93, 28,09 ;
Raies moyennement intenses : 8,23, 15,52, 18,85, 20,27;
Raies peu intenses : 13,99, 19,35, 21,45.

2. Procédé pour préparer la modification β, donnée dans la revendication 1, du colorant de formule I, caractérisé en ce qu'on chauffe la modification α du colorant de formule I à des températures de 50 à 150°C.

3. Procédé selon la revendication 2, caractérisé en ce qu'on chauffe la modification a en suspension dans l'eau.

4. Procédé selon la revendication 3, caractérisé en ce qu'on utilise directement, comme suspension aqueuse, la suspension obtenue après la fin de la copulation lors de la synthèse du colorant par diazotation et copulation.

5. Procédé selon la revendication 3 et/ou 4, caractérisé en ce qu'on ajoute à la suspension à chauffer un dispersant et/ou des émulsifiants et/ou des solvants.

6. Procédé selon la revendication 2, caractérisé en ce que la modification α est chauffée lors de la conversion usuelle du colorant en une forme très finement divisée.

7. Préparation colorante, caractérisée en ce qu'elle contient la modification β, selon la revendication 1, du colorant de formule I.

8. Utilisation de la modification β selon la revendication 1 du colorant de formule I pour teindre et imprimer des structures bidimensionnelles façonnées, telles que des fibres, des tissus ou des feuilles en des matériaux synthétiques ou semi-synthétiques, ou leurs mélanges avec des fibres de cellulose.
